# EUROPEAN PATENT APPLICATION

(11) **EP 3 640 044 A1**
(43) Date of publication of application: **22.04.2020**
(21) Application number: 19203598.8
(22) Date of filing: 16.10.2019
(51) Int. Cl.: B60B 1/00, B60B 1/04, B60B 21/02, B60B 21/06, B60B 21/12, B60C 5/16

(54) **SPOKE COVER FOR A BICYCLE RIM**

(30) Priority: 17.10.2018 US 201816163229
(71) Applicant: SRAM, LLC, Chicago, IL 60607 (US)
(72) Inventor: TROUW, Ruan, Mooresvillle, IN 46158 (US); HALL, Michael, Indianapolis, IN 46220 (US); MORSE, David, Indianapolis, IN 46203 (US); MARSHALL, Simon, Zionsville, IN 46077 (US); BROWN, Louis, Indianapolis, IN 46240 (US); LEACHMAN, John, Indianapolis, IN 46237 (US)
(74) Representative: Thum, Bernhard

(57) **Abstract**

A rim assembly for a bicycle wheel includes a rim and a cover. The rim includes a radially inner portion disposed along an inner circumference of the rim, a first sidewall, and a second sidewall spaced apart from the first sidewall. The first sidewall and the second sidewall extend radially outward form the radially inner portion. The rim also includes a radially outer tire engaging portion disposed along an outer circumference of the rim and. The radially outer tire engaging portion extends from the first sidewall and the second sidewall, respectively. A portion of the radially outer tire engaging portion defines a well disposed between the first sidewall and the second sidewall, opposite the radially inner portion. The rim assembly also includes a cover disposed in the well of the rim. The cover includes one or more openings that extend at least partially through the cover.

## Description

### 1. Field of the Disclosure

The present disclosure is generally directed to a cover for spokes extending through a rim.

### 2. Description of Related Art

A traditional bicycle wheel may include a rim formed of extruded metals or other materials that are bent and bonded into a circular shape having consistently shaped cross sections. Recently, other materials, such as carbon fiber reinforced plastics, have been used in the manufacture of bicycle rims, which may be formed into circular shapes through non-extrusion based processes. Carbon fiber reinforced plastics may, for example, be used.

The rim may be configured for the attachment of any number of different types of tires. For example, the rim may be configured for attachment of a tubeless clincher tire. The tubeless clincher tire includes beads that interact with a tire engaging portion of the rim. The tire engaging portion of the rim includes a rim bed that defines a well. The well provides a volume into which the beads of the tire may be placed when the tire is being attached to the rim.

The wheel includes a hub and spokes that are attached to the hub. The spokes extend radially outward from the hub, through openings through the rims, and are attached to the rim with fasteners such as, for example, nipples. Heads of the nipples are at least partially disposed within the well of the rim when the spokes are attached to the rim. Any protrusions in the rim may create localized gaps between the tubeless clincher tire and the rim, resulting in loss of air and failure to inflate the tire.

### Summary

In one example, a rim assembly for a bicycle wheel includes a rim and a cover. The rim includes a radially inner portion disposed along an inner circumference of the rim, a first sidewall, and a second sidewall spaced apart from the first sidewall. The first sidewall and the second sidewall extend radially outward from the radially inner portion. The rim also includes a radially outer tire engaging portion disposed along an outer circumference of the rim and extending from the first sidewall and the second sidewall, respectively. A portion of the radially outer tire engaging portion defines a well disposed between the first sidewall and the second sidewall, opposite the radially inner portion. The cover is disposed in the well of the rim. The cover includes one or more openings that extend at least partially through the cover.

In one example, an opening of the one or more openings is aligned with an opening extending through the rim.

In one example, the cover is made of a different material than the rim.

In one example, the cover has a first surface and a second surface opposite the first surface. The first surface of the cover abuts a surface of the rim at least partially defining the well.

In one example, the first surface of the cover is attached to the surface of the rim at least partially defining the well with an adhesive.

In one example, the one or more openings extend entirely through the cover, from the first surface of the cover to the second surface of the cover.

In one example, the one or more openings extend partially through the cover, from the first surface of the cover, into the cover.

In one example, a maximum thickness of the cover, between the first surface of the cover and the second surface of the cover, is between two millimeters and eight millimeters.

In one example, the second surface of the cover has a first edge and a second edge opposite the first edge. The one or more openings include a first opening and a second opening. The first opening is at the first edge of the second surface or closer to the first edge of the second surface than the second edge of the second surface, and the second opening is at the second edge of the second surface or closer to the second edge of the second surface than the first edge of the second surface.

In one example, the cover is a first cover. The rim further includes a second cover disposed in the well of the rim. The second cover includes one or more openings that extend at least partially through the second cover. The second cover abuts the first cover or is adjacent to the first cover.

In one example, the cover is a hoop that extends around the rim.

In one example, a cover for one or more spokes extending through a rim for a bicycle includes a body. The body has a first surface and a second surface opposite the first surface. The body is positionable within a well of the rim, such that at least a portion of the first surface of the body abuts a surface at least partially defining the well. The body includes one or more openings extending from the first surface of the body, into the body.

In one example, a maximum thickness between the first surface and the second surface is at least two millimeters.

In one example, the second surface has a first edge and a second edge opposite the first edge. The one or more openings are one or more cutouts at the first edge of the second surface or the second edge of the second surface, respectively.

In one example, the one or more cutouts include a first cutout and a second cutout. The first cutout is at the first edge, and the second cutout is at the second edge. The second cutout is a cutout of the one or more cutouts closest to the first cutout.

In one example, the body is a continuous hoop.

In one example, the continuous hoop is made of an elastic material.

In one example, the continuous hoop is made of ethylene propylene diene monomer (EPDM) rubber, ethylene-vinyl acetate (EVA), neoprene, a thermoplastic, a fiber reinforced plastic, an elastomeric polymer, or any combination thereof.

In one example, a wheel for a bicycle includes a central hub configured for rotational attachment to the bicycle, and a plurality of spokes attached to the central hub and extending radially outward from the hub. The plurality of spokes consist of a number of spokes. The wheel also includes a rim that includes a radially inner portion disposed along an inner circumference of the rim. The plurality of spokes are attached to the radially inner portion. The rim also includes a first sidewall and a second sidewall spaced apart from the first sidewall. The first sidewall and the second sidewall extend radially outward from the radially inner portion. The rim includes a radially outer tire engaging portion disposed along an outer circumference of the rim. The radially outer tire engaging portion extends from the first sidewall and the second sidewall, respectively. The rim includes a rim bed opposite the radially inner portion. The rim bed is between the first sidewall and the second sidewall and defines a well. The plurality of spokes extend through the radially inner portion, such that portions of the plurality of spokes, respectively, are disposed in the well. The wheel also includes a cover disposed in the well of the rim, over the portions of the plurality of spokes. The cover is adjacent to the portions of the plurality of spokes.

In one example, the cover is disposed opposite and at a distance from a portion of the rim bed through which the plurality of spokes extend.

### Brief Description of the Drawings

Objects, features, and advantages of the present invention will become apparent upon reading the following description in conjunction with the drawing figures, in which:
FIG. 1 is a side view schematic of a bicycle that may be constructed to utilize a rim including one or more spoke covers;
FIG. 2 is a side view of a wheel for a bicycle, such as the bicycle of FIG. 1;
FIG. 3 is a side view of a rim for a bicycle, such as the bicycle of FIG 1, with a tubeless clincher tire attached;
FIG. 4 is a perspective view of the rim of FIG. 3 with the tubeless clincher tire attached;
FIG. 5 is a close-up first perspective view of a cross-section of a wheel including a first embodiment of a rim bed cover disposed on a rim of the wheel;
FIG. 6 is a close-up second perspective view of a cross-section of a wheel including the rim bed cover of FIG. 5;
FIG. 7 is a side cross-sectional view of a wheel including the rim bed cover of FIG. 5;
FIG. 8 is a top view of a wheel including an example of a rim bed cover;
FIG. 9 is a top view of a wheel including another example of a rim bed cover;
FIG. 10 is a top view of the rim bed cover of FIG. 8;
FIG. 11 is a top view of the rim bed cover of FIG. 9;
FIG. 12 is a close-up perspective view of a cross-section of a wheel including the rim bed cover of FIG. 5 and rim tape;
FIG. 13 is a first front cross-sectional view of the wheel of FIG. 12;
FIG. 14 is a second front cross-sectional view of the wheel of FIG. 12;
FIG. 15 is a first front cross-sectional view of a wheel including a second embodiment of a rim bed cover disposed on a rim of the wheel;
FIG. 16 is a second front cross-sectional view of the wheel of FIG. 15;
FIG. 17 is a close-up first perspective view of a cross-section of a wheel including a third embodiment of a rim bed cover disposed on a rim of the wheel;
FIG. 18 is a close-up view of portion B of FIG. 17;
FIG. 19 is a first front cross-sectional view of the wheel of FIG. 17; and
FIG. 20 is a second front cross-sectional view of the wheel of FIG 17.

### Detailed Description of the Disclosure

Rim tape may be applied to a tire engaging portion of a rim for a tubeless clincher tire to seal the rim. Sealing the rim allows the tubeless clincher tire to be a pressure vessel and inflate to a fully seated position where beads of the tire are located at a base of clincher walls of the tire engaging portion, respectively. In the prior art, the rim tape may be placed directly on the rim bed, over nipple heads extending through the rim and into the rim bed. Rim shapes with deep wells may be difficult to cover with rim tape, as the rim tape may wrinkle or span gaps. When the rim tape wrinkles, air leaks out, and the tubeless clincher tire does not inflate. If the rim tape spans concave sections of the rim, then the rim tape may slide into place with tire pressure, and the rim tape may not span the full width of the rim. This may also result in leakage during use of a wheel including the rim and the tubeless clincher tire.

When attaching the tubeless clincher tire to the rim, gaps exist between the rim tape and the rim bed, adjacent to the nipple heads, and between the rim tape and the tire, between adjacent nipple heads. These gaps allow air to escape during inflation of the tubeless clincher tire. Also, an uneven surface created by the nipple heads interferes with the tire and prevents the beads of the tire from making full contact with the rim, making initial seating of the tubeless clincher tire during attachment of the tire to the rim difficult.

The present disclosure provides examples of rim bed covers, rim assemblies, and wheels that solve or improve upon one or more of the above-noted and/or other disadvantages with prior known rims and wheels. The disclosed rim bed covers include strips or hoops of material that cover irregularities within the rim bed of a rim for tubeless clincher tires. For example, a rim strip may be disposed in the rim bed of the rim and cover spokes and/or nipple heads that extend into a well defined by the rim bed of the rim. The rim strip smooths out the irregularities (e.g., the nipple heads) and thus forms a smooth contact surface for the rim tape and the tubeless clincher tire being installed. The rim strip includes holes, cutouts, and/or pockets, in which the nipple heads, for example, are positioned, such that the nipple heads are partially or completely covered.

A significant advantage of the disclosed rim bed covers is that the use of one or more strips or a hoop of material to cover irregularities at a rim bed of a rim forms a smooth contact surface for rim tape application and installation of a tire, thus making the rim easier to seal and allowing for easier tire seating. The rim bed covers prevent nipple head interference and even out, for example, an area between nipple heads at the rim bed of the rim. Another advantage of the disclosed rim bed covers is that the one or more strips or the hoops may be made of a particular material and/or sized and shaped to provide a radially outward force that pushes the rim tape against beads of the tire during installation of the tire, thus creating a seal and allowing for easier tire seating.

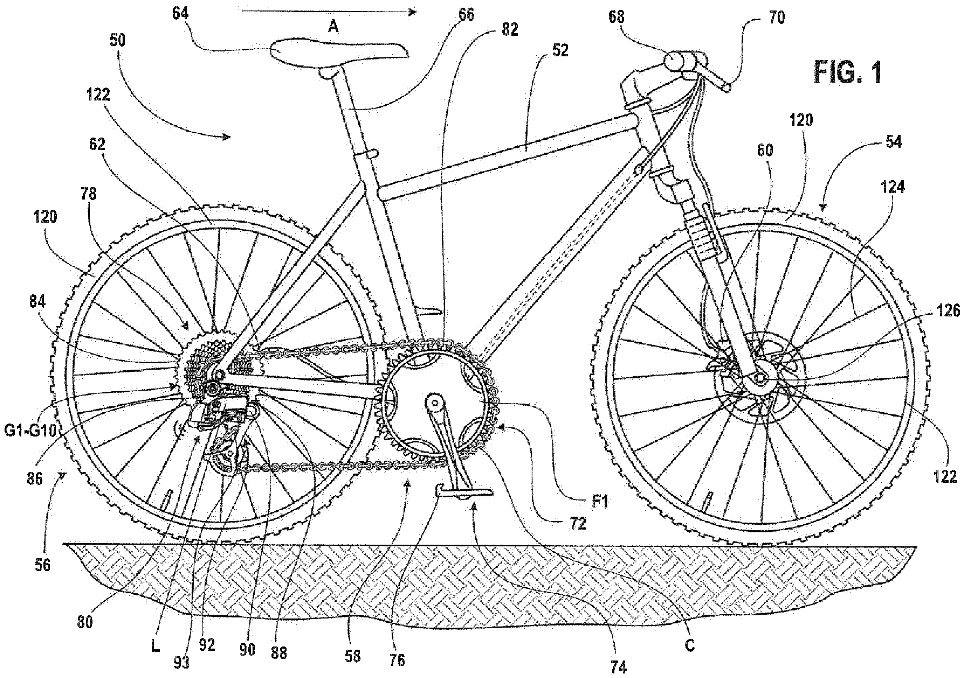

Turning now to the drawings, FIG. 1 generally illustrates a bicycle 50 that employs rim assemblies including rim bed covers constructed in accordance with the teachings of the present disclosure. The bicycle 50 includes a frame 52, a front wheel 54 and a rear wheel 56 each rotatably attached to the frame 52, and a drivetrain 58. A front brake 60 is provided for braking the front wheel 54, and a rear brake 62 is provided for braking the rear wheel 56. The bicycle 50 also generally has a seat 64 near a rear end of the frame 52 and carried on an end of a seat tube 66 connected to the frame 52. The bicycle 50 also has handlebars 68 near a forward end of the frame 52. A brake lever 70 is carried on the handlebars 68 for actuating the front brake 60, the rear brake 62, or both the front brake 60 and the rear brake 62. If the brake lever 70 actuates only one of the front brake 60 and the rear brake 62, a second brake lever (not shown) may also be provided to actuate the other brake. A front and/or forward riding direction or orientation of the bicycle 50 is indicated by the direction of the arrow A in FIG. 1. As such, a forward direction for the bicycle 50 is indicated by the direction of arrow A. While the illustrated bicycle 50 depicted in FIG. 1 is a mountain bike with full or partial suspensions and flat-style handlebars 68, the present disclosure may be applicable to bicycles of any type, including, for example, road bikes with drop-style handlebars 68.

The drivetrain 58 has a chain C and a front sprocket assembly 72, which is coaxially mounted with a crank assembly 74 having pedals 76. The drivetrain 58 also includes a rear sprocket assembly 78 coaxially mounted with the rear wheel 56 and a rear gear change mechanism, such as a rear derailleur 80.

As is illustrated in FIG. 1, the front sprocket assembly 72 may include one or more coaxially mounted chain rings, gears, or sprockets. In this example, the front sprocket assembly 72 has one or more sprockets F1 each having teeth 82 around a respective circumference. As shown in FIG. 1, the rear sprocket assembly 78 may include a plurality (e.g., ten) of coaxially mounted gears, cogs, or sprockets G1-G10. Each sprocket G1-G10 also has teeth 84 arranged around a respective circumference. The number of teeth 84 on the smaller diameter rear sprocket G10 may be less than the number of teeth on the larger diameter rear sprocket G1. The number of teeth 84 on the rear sprockets G1-G10 may gradually decrease from the largest diameter rear sprocket G1 to the smallest diameter sprocket G10. Though not described in any detail herein, in one embodiment, the front sprocket assembly 72 includes at least two front sprockets F1, and a front gear changer may be operated to move from a first operating position to a second operating position to move the chain C between the at least two front sprockets F1. Likewise, the rear derailleur 80 may be operable to move between, for example, ten different operating positions to switch the chain C to a selected one of the rear sprockets G1-G10. In an embodiment, the rear sprocket assembly 72 may have more or fewer sprockets. For example, in an embodiment, a rear sprocket assembly may have eleven or twelve sprockets. Dimensions and a configuration of the rear derailleur 80 may be modified to accommodate a specific implemented plurality of sprockets. For example, an angle and length of the linkage and/or the configuration of the cage of the derailleur may be modified to accommodate specific sprocket combinations.

The rear derailleur 80 is depicted as a wireless, electrically actuated rear derailleur mounted or mountable to the frame 52, or frame attachment, of the bicycle 50. The electric rear derailleur 80 has a base member 86 (e.g., a b-knuckle) that is mounted to the bicycle frame 52. A linkage 88 has two links L that are pivotally connected to the base member 86 at a base member linkage connection portion. A movable member 90 (e.g., a p-knuckle) is connected to the linkage 88 at a moveable member linkage connection portion. A chain guide assembly 92 (e.g., a cage) is configured to engage and maintain tension in the chain and has one or more cage plates 93 with a proximal end that is pivotally connected to a part of the movable member 90. The cage plate 93 may rotate or pivot about a cage rotation axis in a damping direction and a chain tensioning direction. Other gear changing systems, such as mechanically or hydraulically controlled and/or actuated systems may also be used.

A motor module may be carried on the electric rear derailleur 80 with a battery. The battery supplies power to the motor module. In one example, the motor module is located in the movable member 90. However, the motor module may instead be located elsewhere, such as in one of the links L of the linkage 88 or in the base member 86. The motor module may include a gear mechanism or transmission. As is known in the art, the motor module and gear mechanism may be coupled with the linkage 88 to laterally move the cage plate 93 and thus switch the chain C among the rear sprockets (e.g. G1-G10) on the rear sprocket assembly 78.

The cage plate 93 also has a distal end that carries a tensioner cog or wheel. The wheel also has teeth around a circumference. The cage plate 93 is biased in the chain tensioning direction to maintain tension in the chain C. The chain guide assembly 92 may also include a second cog or wheel, such as a guide wheel disposed nearer the proximal end of the cage plate 93 and the movable member 90. In operation, the chain C is routed around one of the rear sprockets (e.g. G1-G10). An upper segment of the chain C extends forward to the front sprocket assembly 72 and is routed around the front sprocket F1. A lower segment of the chain C returns from the front sprocket assembly 72 to the tensioner wheel and is then routed forward to the guide wheel. The guide wheel directs the chain C to the rear sprockets (e.g. G1-G10). Lateral movement of the cage plate 93, tensioner wheel, and guide wheel may determine the lateral position of the chain C for alignment with a selected one of the rear sprockets (e.g. G1-G10).

The bicycle 50 may include one or more bicycle control devices mounted to handlebars 68. The bicycle control devices may include one or more types of bicycle control and/or actuation systems. For example, the bicycle control devices may include brake actuation systems to control the front brake 60 and/or the rear brake 62, and/or gear shifting systems to control the drivetrain 58. Other control systems may also be included. For example, the system may be applied, in some embodiments, to a bicycle where only a front or only a rear gear changer is used. Also, the one or more bicycle control devices may also include suspension and/or other control systems for the bicycle 50.

The front wheel 54 and/or the rear wheel 56 of the bicycle 50 may include a tire 120 attached to a radially outer tire engaging portion of a rim 122. A plurality of spokes 124 are attached directly to the rim 122 with any number of connectors including, for example, nipples. Other connectors may be used. Alternatively, the spokes 124 may be attached and/or secured to the rim 122 with other structural components. The spokes 124 extend from the rim 122 and attach to a central hub 126. The spokes 124 are maintained with a tension between the rim 122 and the central hub 126 to provide the respective wheel 54, 56 with an operational rigidity for use on the bicycle 50. The central hub 126 is configured for rotational attachment to the bicycle frame 52.

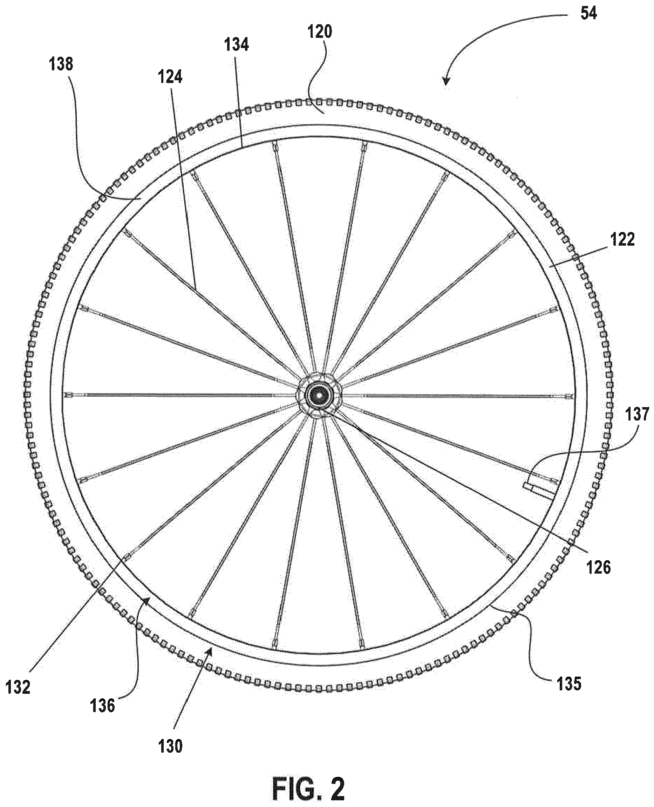

FIG. 2 illustrates a bicycle wheel having one embodiment of a rim 122, spokes 124, and a central hub 126, such as the front wheel 54 of FIG. 1, removed from the rest of the bicycle 50. The bicycle wheel illustrated in FIG. 2 has a tire 120 (e.g., a tubeless clincher tire) attached. The rim 122 includes a tire engaging portion 130 to engage with the tire 120, as is shown in FIG. 1. The tire engaging portion 130 is configured radially outward of a spoke receiving surface 132 that is disposed along an inner circumference 134 of the rim 122. In other words, the tire engaging portion 130 is a radially outer tire engaging portion. In an embodiment, the tire engaging portion 130 is disposed along an outer circumference 135 of the rim 122. The tire engaging portion 130 is configured for attachment to tires using clincher tire attachment configurations for tires including beaded interlock attachments. Other configurations of the tire engaging portion 130 may also be provided to allow for the use of other types of tires on the rim 122.

The rim 122 provides structure for attachment of the spokes 124 to the rim 122 at a receiving portion of the rim 122, proximate to the spoke receiving surface 132. As such, the spoke receiving surface 132 is part of a spoke engaging portion 136 (e.g., a radially inner portion) of the rim 122. In an embodiment, the spoke engaging portion 136 of the rim 122 is disposed along the inner circumference 134 of the rim 122. In another embodiment, the spoke receiving surface 132 and the spoke engaging portion 136 may be separate parts and/or portions of the rim 122. For example, the spokes 124 may pass through the spoke receiving surface 132, and the structure for attachment to the rim 122 may be provided proximate to the tire engaging portion 130.

The front wheel 54 illustrated in FIG. 2, for example, includes a valve 137 that extends through the rim 122. The valve 137 extends away from the spoke engaging portion 136 of the rim 122, and the tire 120 may be inflated via the valve 137.

The rim 122 includes a first sidewall 138 and a second sidewall that extend between the tire engaging portion 130 and the spoke engaging portion 136. For example, the first sidewall 138 and the second sidewall extend radially outward from the spoke engaging portion 136 to the tire engaging portion 130. The first sidewall 138 is spaced apart from the second sidewall.

In one embodiment, at least part of the rim 122 (e.g., the first sidewall 138 and the second sidewall) is formed by one or more composite materials. In one embodiment, the entire rim 122 is formed by carbon-fiber reinforced plastic. The rim 122 may, however, be formed of other materials and/or material combinations. In one example, carbon-fiber reinforced plastic forms a one-piece unitary rim of a singular collection of carbon-fiber layers including the tire engaging portion 130, the first sidewall 138, the second sidewall, and the spoke engaging portion 136. Other configurations may also be provided.

The front wheel 54 and the rear wheel 56 may include rims 122 configured for any size wheel. In an embodiment, the rims 122 are configured for use in wheels conforming to a 700C (e.g. a 622 millimeter diameter clincher and/or International Standards Organization 622mm) bicycle wheel standard. Other wheel standard sizes may also be used.

The front wheel 54 and the rear wheel 56 may rotate about the central hub 126 in either direction. For example, as shown in FIG. 2, the front wheel 54 and the rear wheel 56 may be configured to rotate in a particular rotational direction about the central hub 126. In another example, the front wheel 54 and the rear wheel 56 may be configured to rotate in a direction opposite the particular rotational direction.

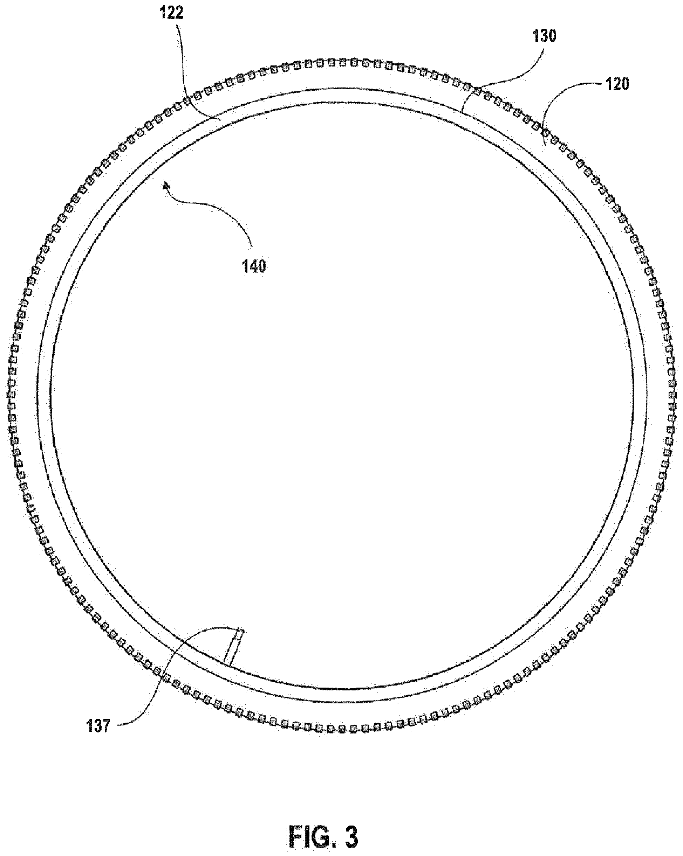

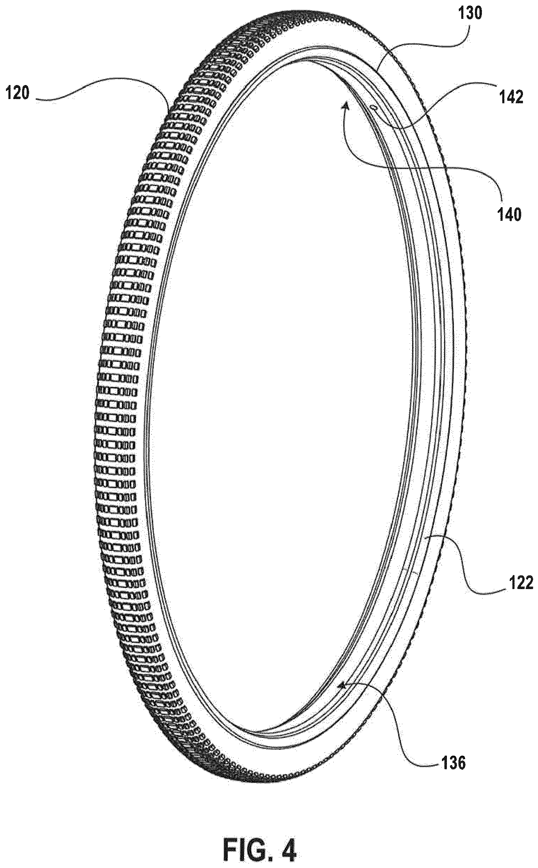

FIGS. 3 and 4 illustrate a rim assembly 140, including the rim 122, with the tire 120 attached. The tire 120 is, for example, a tubeless clincher tire and is attached to the rim 122 at the tire engaging portion 130 of the rim 122. When attaching a tubeless clincher tire, for example, to a rim of the prior art, gaps exist between the rim tape and the rim bed, adjacent to nipple heads used to attach spokes to the rim, and between the rim tape and the tire, between adjacent nipple heads. These gaps allow air to escape during inflation of the tubeless clincher tire. Also, an uneven surface created by the nipple heads interferes with the tire and prevents the beads of the tire from making full contact with the rim, making initial seating of the tubeless clincher tire during attachment of the tire to the rim difficult. The rim assembly 140 includes a rim bed cover that evens out irregularities in the rim bed of the rim 122 by, for example, at least partially covering the nipple heads disposed in and extending beyond the rim bed of the rim 122. The rim bed cover may even out other irregularities in the rim bed including, for example, one or more electric devices disposed in the rim bed of the rim 122. For example, sensors and/or other electronics that are part of a remote tire pressure monitoring system may be disposed in, at, and/or adjacent to the rim bed, and the rim bed cover may at least partially cover the sensors and/or the other electronics. The rim bed cover forms a smooth contact surface for rim tape application and installation of the tire 120, thus making the rim 122 easier to seal and allowing for easier seating of the tire 120.

Referring to FIG. 4, the rim 122 includes an opening 142 (e.g., a through hole), through which the valve 137 extends. The through hole 142 extends from the spoke engaging portion 136 of the rim 122, into and through the rim 122. The through hole 142 may be sized and/or shaped to match a size and/or shape of the valve 137, respectively.

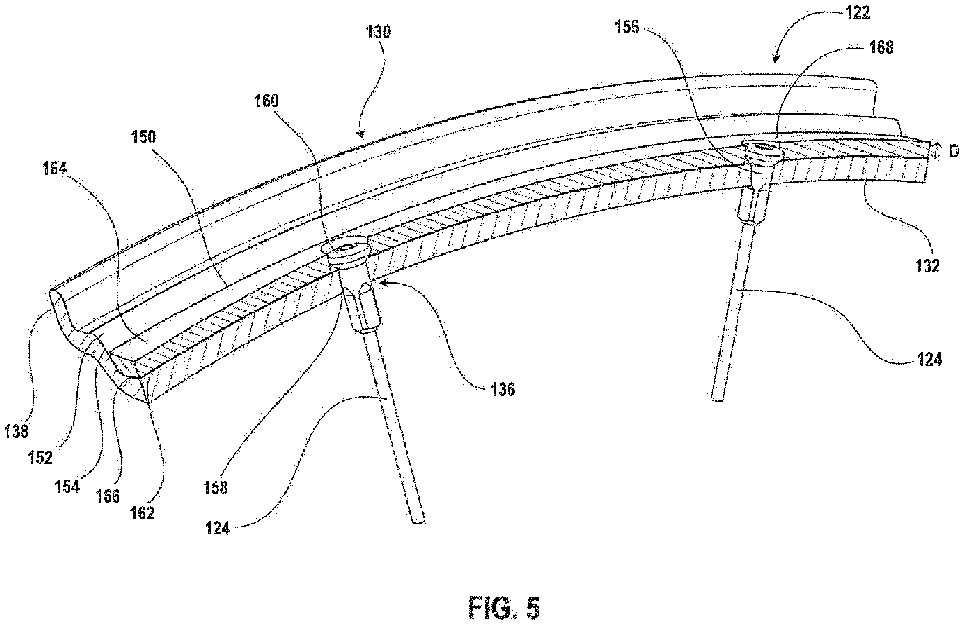

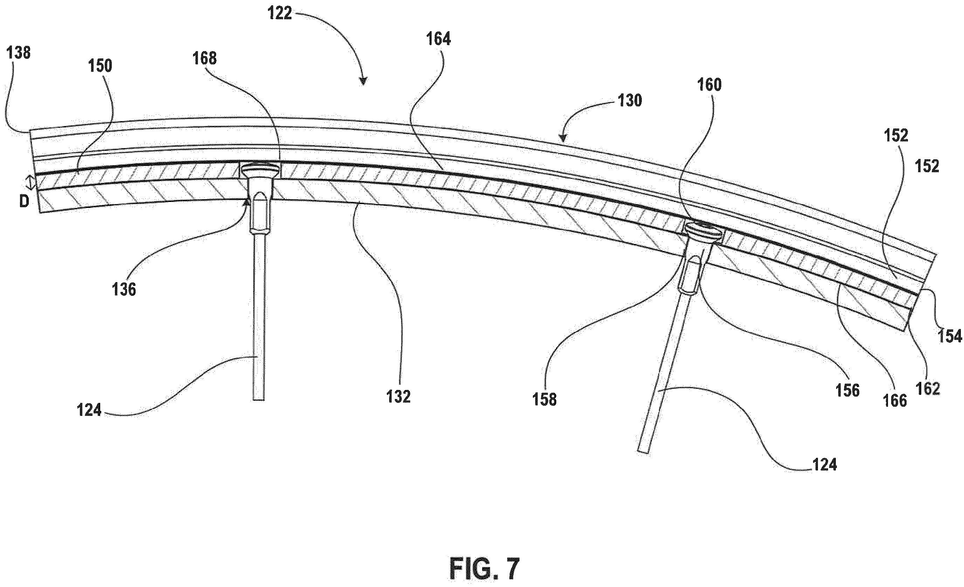

Referring to FIGS. 5-7, a first embodiment of a rim bed cover 150 (e.g., a leveling member or a smoothing member) is disposed in a well 152 (e.g., a volume into which beads of the tire 120 are disposed during attachment of the tire 120 to the rim 122) at least partially defined by a rim bed 154 of the tire engaging portion 130 of the rim 122. The rim bed 154 is formed by one or more surfaces of the tire engaging portion 130 and extends between the first sidewall 138 and the second sidewall. The one or more surfaces of the rim bed 154 define a well 152 with a cross section having any number of shapes including, for example, a trapezoid. Other cross-sectional shapes may be provided.

The spokes 124 extend from the hub (not shown), towards the spoke engaging portion 136 of the rim 122, and through the rim 122. The spokes 124 are attached to the rim 122 in any number of ways including, for example, with connectors (e.g., nipples 156). For example, the rim 122 includes openings 158 through the rim 122 that correspond to the spokes 124. The spokes 124 and/or the nipples 156 extend at least partially through the openings 158, respectively, and the spokes 124 are attached to the rim 122 at the rim bed 154 via heads 160 of the nipples 156 (e.g., nipple heads).

A size and/or a shape of the rim bed cover 150 may be dependent on a size and/or a shape of the rim bed 154, and thus the well 152. For example, the rim bed cover 150 may be sized and shaped to match contours of at least a portion of the rim bed 154. As shown in the examples of FIGS. 5-8, a shape of the cross-section of the rim bed cover 150 may be trapezoidal (e.g., opposite sides of the rim bed cover may be non-orthogonal relative to the first surface 162 of the rim bed cover 150). The rim bed cover 150, which is, for example, trapezoidal-shaped, may be molded into the well 152 of the rim and/or may be formed by compression of the material of the rim bed cover 150 during installation of the rim bed cover 150 on the rim 122. For example, the material of the rim bed cover 150 may be compliant and may conform to a shape of the well 152. Other cross-section shapes may be provided.

A thickness of the rim bed cover 150 may, for example, be dependent on heights of the portions of the nipple heads 160 within the well 152. The rim bed cover 150 has a first surface 162 and a second surface 164 opposite the first surface 162. When the rim bed cover 150 is positioned on the rim 122 (e.g., disposed within the well 152) the first surface 162 abuts a surface 166 (e.g., a lowermost surface) of the rim bed 154. The surface 166 of the rim bed 154 is, for example, opposite the spoke receiving surface 132 of the rim.

The thickness (e.g., a height) of the rim bed cover 150 may be defined by a distance D between the first surface 162 and the second surface 164 of the rim bed cover 150. The thickness of the rim bed cover 150 may be any number of sizes. For example, the thickness of the rim bed cover 150 may be between 2 millimeters and 8 millimeters. Other thicknesses may be provided.

The rim bed cover 150 may be attached to the rim bed 154 and/or one or more other portions of the rim 122 in any number of ways. For example, the rim bed cover 150 is attached to the rim 122 with an adhesive. In another embodiment, the rim bed cover 150 is shaped as a hoop and is flexible, and the rim bed cover 150 is sized (e.g., with an inner diameter that is less than a diameter of the rim 122 at the surface 166 of the rim 122) such that the rim bed cover 150 is fixed relative to the rim 122 once the rim bed cover 150 is disposed on the rim 122 (e.g., within the well 152, abutting the surface 166 of the rim 122). The rim bed cover 150 may be attached to the rim 122 in other ways including, for example, with connectors. In one example, one or more portions of the rim bed cover 150 shaped as a hoop are hollow. For example, the entire rim bed cover 150 shaped as a hoop is hollow.

The rim bed cover 150 at least partially covers, for example, the nipple heads 160 and/or other irregularities at the rim bed 154, within the well 152 of the rim 122. The rim bed cover 150 includes one or more openings 168 (e.g., one or more vacancies) that extend from the first surface 162 of the rim bed cover 150, at least partially through the rim bed cover 150. Each of the one or more openings 168 includes a perimeter 169 that defines an edge. The perimeters 169 of the openings 168, respectively, may be any number of sizes and/or shapes. For example, the perimeters 169 of the openings 168, respectively, may be circular, oval, rectangular, or another shape. All of the openings 168 may be sized and/or shaped the same. In one embodiment, a first subset of the openings 168 has a first size and/or shape, and a second subset of the openings has a second size and/or shape that is different than the first size and/or shape, respectively. In one embodiment, the size and/or shape of the openings 168 matches the size and/or shape of the nipple heads 156, respectively.

As shown in the examples of FIGS. 5-8, the one or more openings 168 may extend from the first surface 162 of the rim bed cover 150, all the way through the rim bed cover 150, to the second surface 164 of the rim bed cover 150. Portions of corresponding nipples 156, nipple heads 160, and/or spokes 124, respectively, are disposed in the one or more openings 168 through the rim bed cover 150. The rim bed cover 150 at least partially covers the nipple heads 160 in that the rim bed cover 150 surrounds and covers at least sides of the nipple heads 160.

The one or more openings 168 may be formed in the rim bed cover 150 in any number of ways. For example, the one or more openings 168 may be formed by removal of material from the rim bed cover 150 (e.g., the hoop-shaped rim bed cover 150). As another example, the rim bed cover 150 may be molded with the one or more openings 168. Other methods may be used to form the one or more openings 168 in the rim bed cover 150.

Positions of the one or more openings 168 within the rim bed cover 150 correspond to the openings 158 through the rim 122, and thus the nipple heads 160 and/or the spokes 124 of the wheel 54, 56. In other words, the positioning of the one or more openings 168 (e.g., relative to each other) within the rim bed cover 150 is determined by locations at which the spokes 124 extend through the rim 122.

In one embodiment, the rim bed cover 150 is a continuous hoop that extends along the tire engaging portion 130 (e.g., within the well 152) of the rim 122, around the entire rim 122, and the rim bed cover 150 includes a plurality of openings 168 corresponding to all of the spokes 124, respectively, of the wheel 54, 56. Alternatively, the rim bed cover 150 is one of a plurality of rim bed covers positioned adjacent to each other along the tire engaging portion 130, around the rim 122, and each rim bed cover 150 of the plurality of rim bed covers includes one or more openings 168 at least partially through the respective rim bed cover 150. Adjacent rim bed covers 150 may abut each other. Alternatively, at least some pairs of adjacent rim bed covers 150 may be positioned at a distance from each other.

The example illustrated in FIG. 5 may, for example, represent one rim bed cover 150 of a plurality of rim bed covers, and each rim bed cover 150 of the plurality of rim bed covers includes two openings 168 that extend entirely through the rim bed cover 150. In one embodiment, some rim bed covers 150 of the plurality of rim bed covers do not include any openings at least partially through the respective rim bed cover 150. Other configurations may be provided. In one embodiment, the rim bed cover 150 is a linear length (e.g., a rim strip) that wraps and is mended in place. Alternatively, the rim bed cover 150 is formed by a plurality of rim strips positioned adjacent to each other along the tire engaging portion 130, around the rim 122.

The rim bed cover 150 may be made of any number of different materials including, for example, ethylene propylene diene monomer (EPDM) rubber, ethylene-vinyl acetate (EVA), neoprene, injection molded plastic, a thermoplastic, a fiber reinforced plastic, an elastomeric polymer, one or more other materials, or any combination thereof. In one embodiment, the rim bed cover 150 is made of a compliant material, such as a flexible and/or elastic material. Elasticity in the material for the rim bed cover 150 may allow that the rim bed cover 150 be stretched over the rim 122 when installing the rim bed cover 150 on the rim 122. In one embodiment, the rim bed cover 150 is made of a different material than at least part of the rim 122. In one example, the rim bed cover 150 is made of a different material than any part of the rim 122.

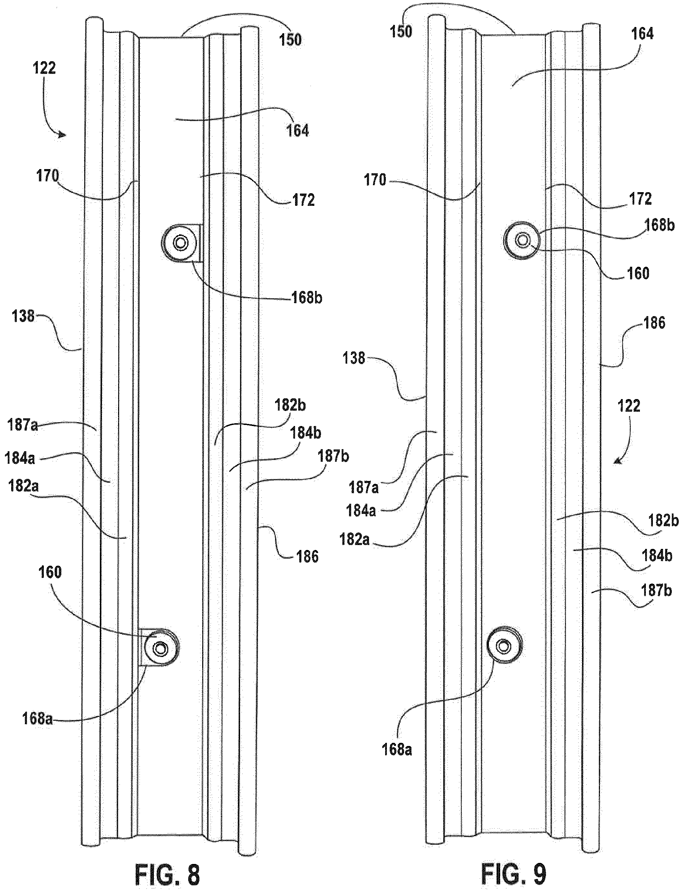

Referring to FIGS. 8-11, the second surface 164 of the rim bed cover 150 has a first edge 170 and a second edge 172 opposite the first edge 170. The rim bed cover 150 may have any number of widths between the first edge 170 and the second edge 172. For example, a width W of the rim bed cover 150 in a direction perpendicular to the first edge 170 and/or the second edge 172 of the second surface 164 of the rim bed cover 150 matches at least a maximum diameter of the nipple heads 160. In one example, the width W of the rim bed cover 150 is at least 4 millimeters. The width W may be a first width in that the width of the rim bed cover 150 may be variable along the height of the rim bed cover 150 (e.g., for a trapezoidal-shaped rim bed cover 150). For example, the variable width along the height of the rim bed cover 150 may match a distance across the well 152 of the rim 122 along a corresponding depth of the well 152. In one embodiment, the width W of the rim bed cover 150 is constant along the height of the rim bed cover 150. In another embodiment, the width W of the rim bed cover 150 is less than a minimum distance across the well 152.

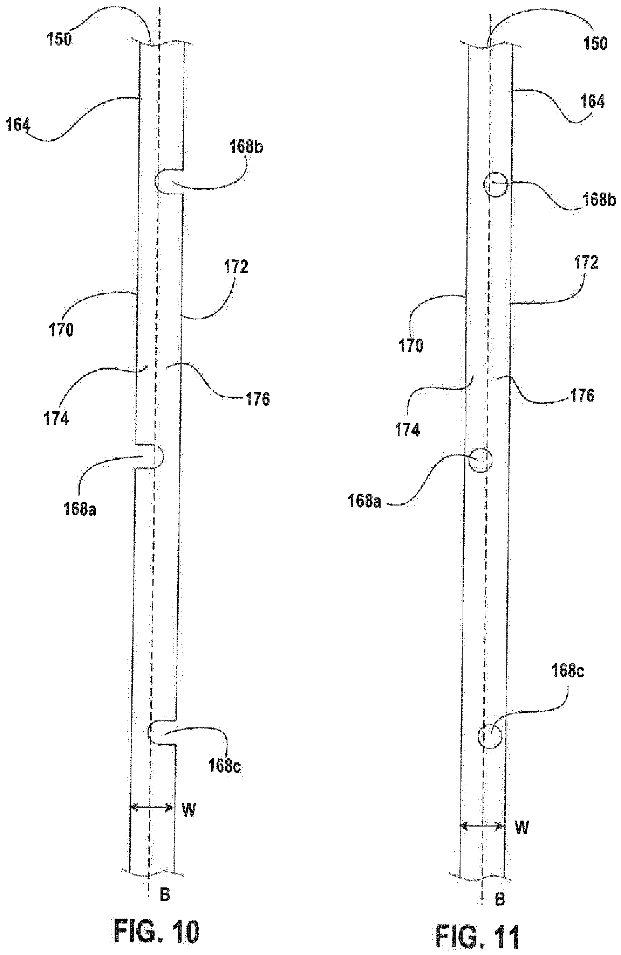

Due to spoke orientation, adjacent openings 168 through the rim bed cover 150 may be positioned differently within the rim bed cover 150. The one or more openings 168 through the rim bed cover 150 include at least a first opening 168a and a second opening 168b. The first opening 168a is closer to the first edge 170 than the second edge 172, and the second opening 168b is closer to the second edge 172 than the first edge. Referring to FIGS. 10 and 11, if the rim bed cover 150 includes more than two openings 168 (e.g., three openings 168), the same positioning for adjacent openings relative to the first edge 170 and the second edge 172, respectively, may be repeated. In other words, adjacent openings 168 alternate being closer to the first edge 170 and the second edge 172. For example, as shown in FIGS 10 and 11, the first opening 168a is at the first edge 170 or closer to the first edge 170 than the second edge 172, and the second opening 168b and a third opening 168c, which are adjacent to the first opening 168a on opposite sides of the first opening 168a, are at the second edge 172 or are closer to the second edge 172 than the first edge 170.

The one or more openings 168 may take any number of forms. For example, as illustrated in the examples of FIGS. 9 and 11, the one or more openings 168 may be holes extending all the way through the rim bed cover 150. In another example, as illustrated in the examples of FIGS. 8 and 10, the one or more openings 168 may be cutouts extending into the rim bed cover 150 from the first edge 170 or the second edge 172, respectively. For example, the first opening 168a is a first cutout that extends into the rim bed cover 150 from the first edge 170, and the second opening 168b is a second cutout that extends into the rim bed cover 150 from the second edge 172. The position of cutouts may follow this pattern along the rim bed cover 150.

Referring to FIGS. 10 and 11, the rim bed cover 150 incudes a centerline B that divides the rim bed cover 150 into a first portion 174 and a second portion 176. The first portion 174 extends between the first edge 170 and the centerline B, and the second portion 176 extends between the second edge 172 and the centerline B. A first subset of openings of the one or more openings 168 are located mostly or entirely within the first portion 174 of the rim bed cover 150, and a second subset of openings of the one or more openings 168 are located mostly or entirely within the second portion 176 of the rim bed cover 150. For example, as shown in FIGS. 10 and 11, the first opening 168a is located mostly within the first portion 174 of the rim bed cover 150, and the second opening 168b and the third opening 168c are located mostly within the second portion 176 of the rim bed cover 150. Adjacent openings of the one or more openings 168 are, for example, located on opposite sides of the centerline B (e.g., within the first portion 174 of the rim bed cover 150 and within the second portion 176 of the rim bed cover 150, respectively).

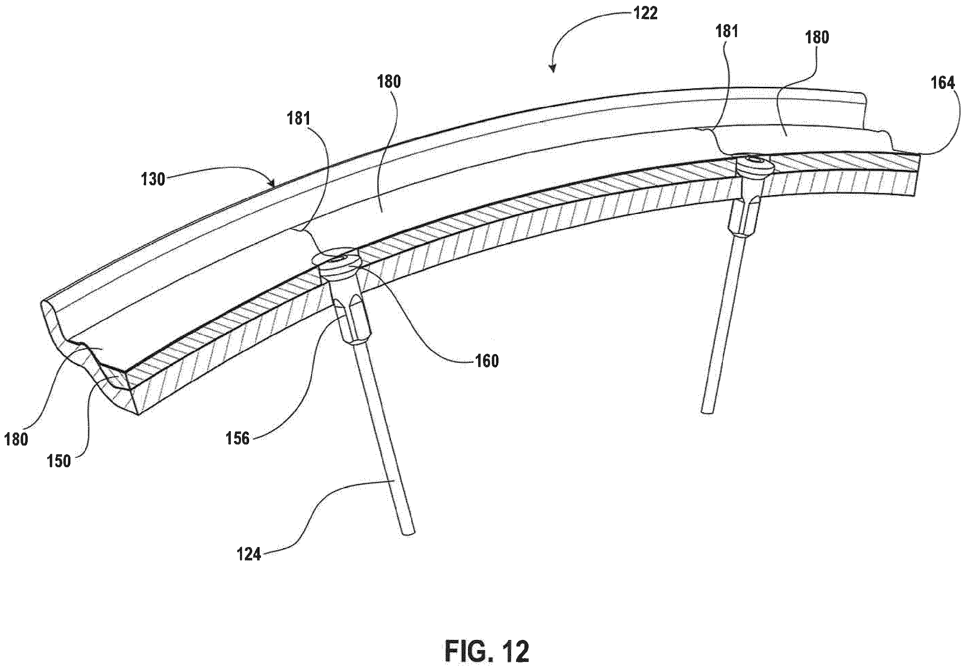

The rim bed cover 150 provides a more regular surface for application of rim tape to the rim 122 for sealing the rim 122. Referring to FIGS. 12-14, rim tape 180 is applied to at least the second surface 164 of the rim bed cover 150. In one example, the rim tape 180 is applied to a portion of the tire engaging portion 130 in addition to the second surface 164 of the rim bed cover 150. A number of pieces of rim tape 180 may be applied to the portion of the tire engaging portion 130 and the second surface 164 of the rim bed cover 150. For example, adjacent pieces of rim tape 180 may overlap, as shown in FIG. 12 with tape seams 181 (e.g., join interfaces) at positions of overlap.

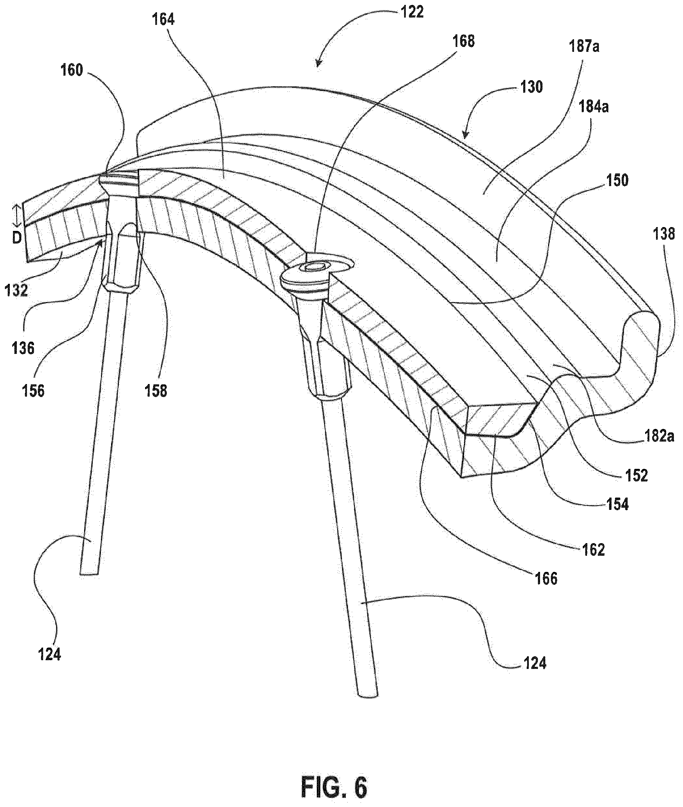

Referring to FIGS. 6, 8, 9, 13, and 14, the tire engaging portion 130 includes ridges 182 (e.g., bead bumps; a first bead bump 182a and a second bead bump 182b) on opposite sides of the well 152, respectively. A first shelf 184a (e.g., a first bead shelf) extends from the first bead bump 182a towards the first sidewall 138, and a second shelf 184b (e.g., a second bead shelf) extends from the second bead bump 182b towards the second sidewall 186. For example, the first bead shelf 184a extends between the first bead bump 182a and a first bead wall 187a opposite the first sidewall 138, and the second bead shelf 184b extends between the second bead bump 182b and a second bead wall 187b opposite the second sidewall 186. The rim bed cover 150 may be disposed axially between the first bead bump 182a and the second bead bump 182b.

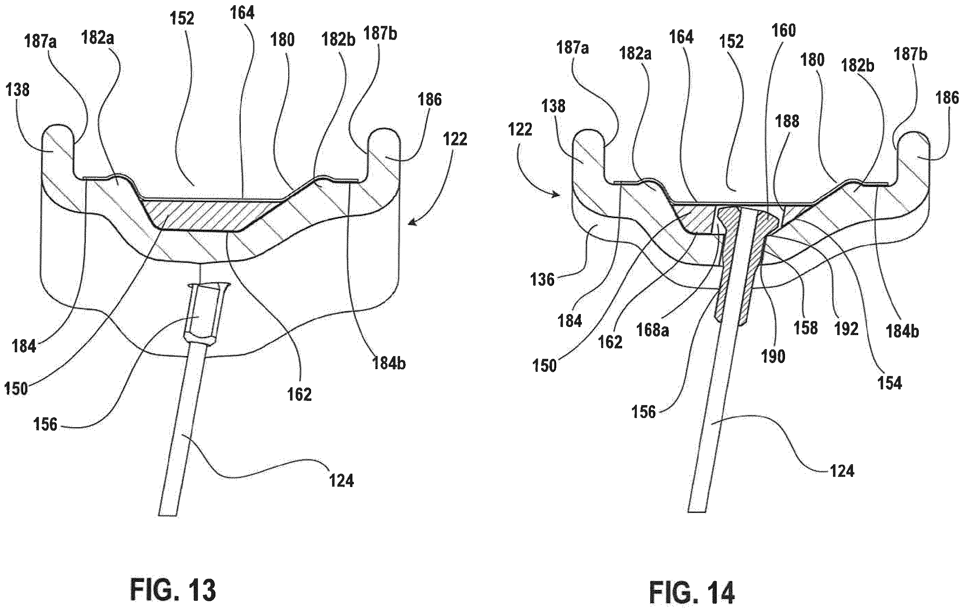

Referring to FIGS. 13 and 14, the rim tape 180 is, for example, disposed on the second surface 164 of the rim bed cover 150, the first bead bump 182a and the second bead bump 182b, and at least portions of the first shelf 184a and the second shelf 184b, respectively. In other embodiments, the rim tape 180 is disposed on more or less of the tire engaging portion 130.

As shown in FIG. 14, the one or more openings 168 through the rim bed cover 150 may extend in a non-orthogonal direction relative to the first surface 162 and/or the second surface 164 of the rim bed cover 150. For example, a wall 188 that at least partially defines the first opening 168a, for example, is non-orthogonal relative to the first surface 162 and the second surface 164 of the rim bed cover 150. Angles of the wall 188 relative to the first surface 162 and the second surface 164 of the rim bed cover 150, respectively, may be defined based on an orientation of a corresponding spoke 124 that extends into the first opening 168a.

Each of the openings 158 through the rim 122 may be, for example, through holes. Each of the through holes 158 includes a radially inner opening 190 at the spoke engaging portion 136 of the rim 122 and a radially outer opening 192 at the rim bed 154 of the rim 122. The radially inner opening 190 and the radially outer opening 192 for a respective one of the through holes 158 may have a same size and/or shape. Alternatively, the radially inner opening 190 and the radially outer opening 192 may have different sizes and/or shapes, respectively. The rim bed cover 150 covers and/or is adjacent to the radially outer opening 192.

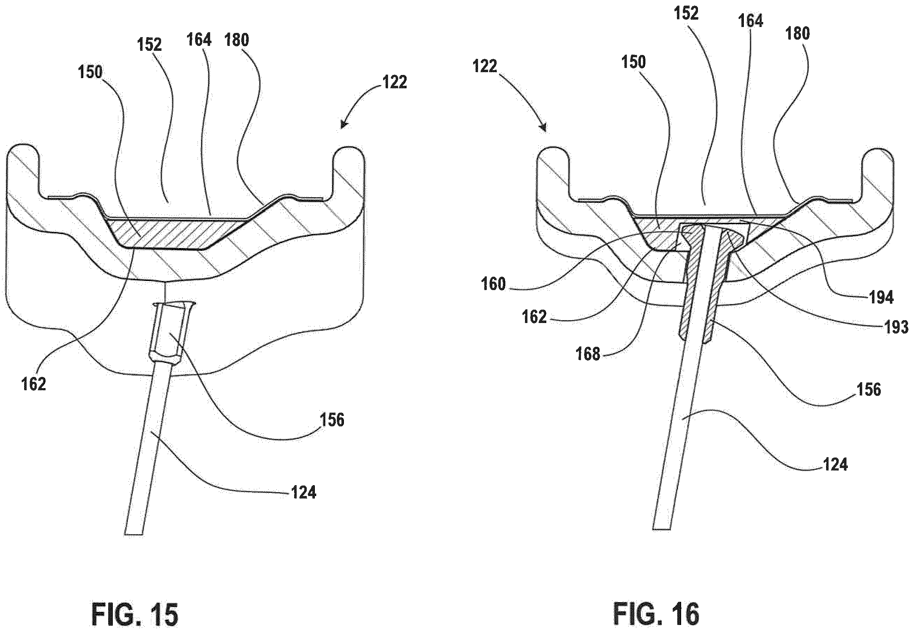

Referring to FIGS. 15 and 16, a second embodiment of a rim bed cover 150 is disposed in the well 152. Unlike the embodiment shown in FIGS. 5-14, the one or more openings 168 in the rim bed cover 150 only extend partially through the rim bed cover 150. For example, the one or more openings 168 extend from the first surface 162 of the rim bed cover 150, into the rim bed cover 150. The rim bed cover 150 covers the sides and the tops 193 of the nipple heads 160 disposed in the well 152, respectively. The one or more openings 168 may extend a distance into the rim bed cover 150 based on heights of the nipple heads 160 disposed in the well 152. The one or more openings 168 extending less than all of the way through the rim bed cover 150 leaves a layer of material 194 (e.g., remaining material) abutting or adjacent to, and above the nipple head 160. The remaining material 194 covers the top 193 of the nipple head 160. In one embodiment, instead of the one or more openings 168 extending only partially through the rim bed cover 150, the one or more openings 168 extend entirely through the rim bed cover 150 and separate plugs are positioned in the one or more openings 168, respectively, such that the plugs abut respective nipple heads 160 and the plugs are flush with the second surface 164 of the rim bed cover 150. In another embodiment, a first subset of the openings 168 extend entirely through the rim bed cover 150, and a second subset of the openings 168 extend only partially through the rim bed cover 150.

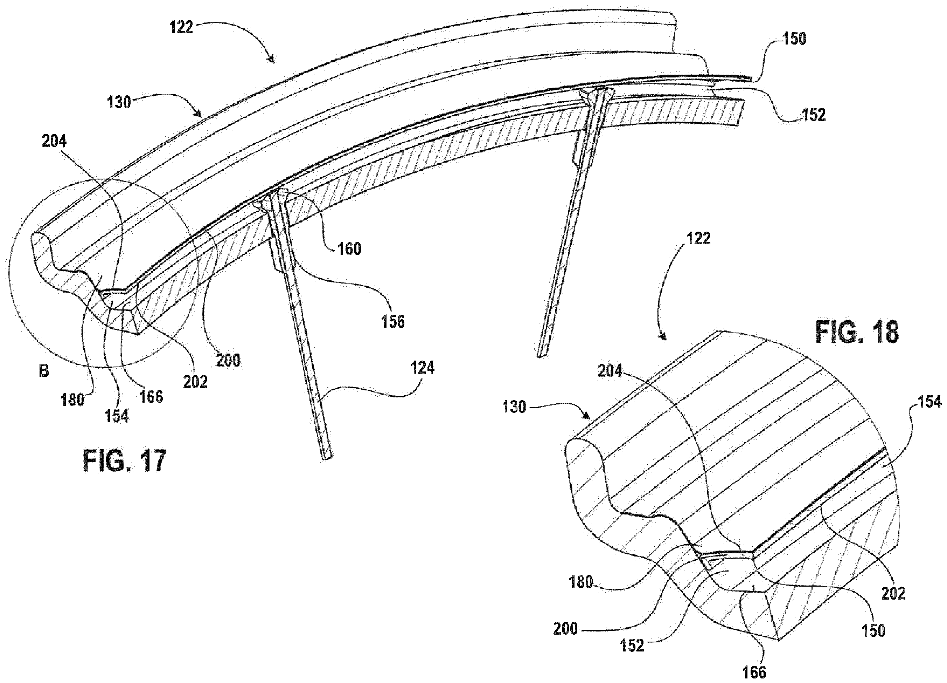

Referring to FIGS. 17-20, a third embodiment of a rim bed cover 150 is disposed in the well 152. In the example shown in FIGS. 17-20, the rim bed cover 150 includes a layer of material 200 that extends along the tire engaging portion 130 of the rim 122, around at least part of the rim 122. For example, the layer of material 200 is shaped like a hoop. In another example, the layer of material 200 is one layer of a plurality of layers of material 200 disposed adjacent to each other around the tire engaging portion 130 of the rim 122 (e.g., forming or approximating a hoop). The width of the rim bed cover 150 may be sized such that the width is larger than a smallest distance across the well 152 (e.g., at the surface 166 of the rim bed 154). The rim bed cover 150 is thus positioned at a distance away from the surface 166 of the rim bed 154 when the rim bed cover 150 is positioned within the well 152. The width of the rim bed cover 150 is sized such that the rim bed cover 150 is offset relative to the surface 166 of the rim bed 154 a greater distance than the height of the nipple heads 160 disposed in the well 152. The rim bed cover 150 is thus adjacent to (e.g., within 2 millimeters) or abuts ends of the nipple heads 160.

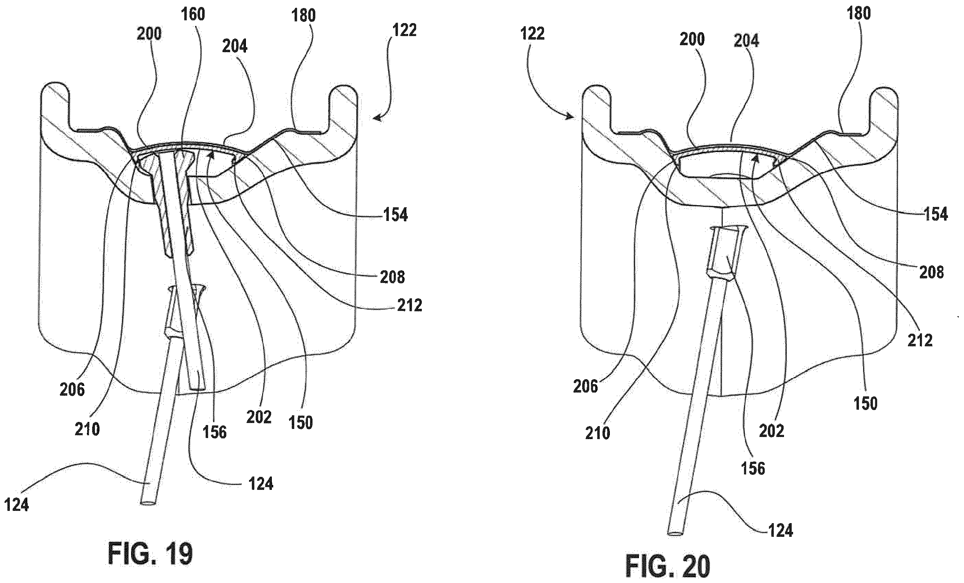

The layer of material 200 has a first surface 202 and a second surface 204 opposite the first surface 202. The first surface 202 of the layer of material 200 is opposite the surface 166 of the rim bed 154. Referring to FIGS. 19 and 20, the first surface 202 of the layer of material 200 has a first edge 206 and a second edge 208 opposite the first edge 206.

The rim bed cover may include rim interface features. The rim interface features may be features that cause a variance in a thickness of the rim bed cover at the interface between the rim and rim bed cover. The rim interface features may provide additional thickness or structure to provide support for the rim bed cover. In an embodiment, such as the embodiment illustrated in FIGS. 17-20, the rim bed cover rim interface features may include ridges.

In this embodiment, the rim interface features of the rim bed cover 150 include a first ridge 210 that runs along the first edge 206 of the first surface 202 of the layer of material 200, and a second ridge 212 that runs along the second edge 208 of the first surface 202 of the layer of material 200. The first ridge 210 and the second ridge 212 may match contours of the rim bed 154 on opposite sides of the well 152, respectively. In this embodiment, the rim bed cover 150 is formed of a thin material, but may have increased thickness at the ridges and/or edges of the rim bed cover. In this embodiment, the material may be a rigid material to assist in providing structural support. Materials such as injection molded plastic, a thermoplastic, a fiber reinforced plastic, an elastomeric polymer, one or more other materials, or any combination thereof may be used.

In an embodiment, the material may be formed into the rim bed cover using any technique. In an embodiment, the rim bed cover is formed with a consistent cross section, for example including the rim interface features. In such an example, the rim bed cover may be formed entirely, or at least in part, through an extrusion process. Other processes may also be used to form the final form of the rim bed cover. For example, the rim bed cover may be extruded into a form, subsequent material removal processes may be used to form vacancies in the rim bed cover.

Referring to FIGS. 19 and 20, at least the second surface 204 of the layer of material 200 may be convex. For example, the second surface 204 of the layer of material 200 is convex, and the first surface 202 of the layer of material 200 is concave. The convex shape of the second surface 204 of the layer of the material 200 and/or the rim bed cover 150 being made of a flexible material (e.g., with a spring constant) may help seat a tire on the rim 122 during the installation process by providing a radially outward force that pushes the rim tape 180, for example, up against the beads of the tire 120 and creates a seal.

Referring to FIGS. 17-20, the rim tape 180 may be applied to the second surface 204 of the layer of material 200 and portions of the tire engaging portion 130 to fix a position of the rim bed cover 150 relative to the rim 122 and to seal the rim 122. In one embodiment, the rim bed cover 150 is attached to the rim 122 with an adhesive. The adhesive seals the rim 122, and the rim tape 180 is not required.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations and/or acts are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that any described program components and systems can generally be integrated together in a single software product or packaged into multiple software products.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, are apparent to those of skill in the art upon reviewing the description.

The Abstract of the Disclosure is provided to comply with 37 C.F.R. §1.72(b) and is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

## Claims

1. A rim assembly for a bicycle wheel, the rim assembly comprising:
a rim comprising:
a radially inner portion disposed along an inner circumference of the rim;
a first sidewall;
a second sidewall spaced apart from the first sidewall, wherein the first sidewall and the second sidewall extend radially outward from the radially inner portion; and
a radially outer tire engaging portion disposed along an outer circumference of the rim and extending from the first sidewall and the second sidewall, respectively, a portion of the radially outer tire engaging portion defining a well disposed between the first sidewall and the second sidewall, opposite the radially inner portion; and
a cover disposed in the well of the rim, the cover including one or more openings that extend at least partially through the cover.

2. The rim assembly of claim 1, wherein an opening of the one or more openings is aligned with an opening extending through the rim, wherein - as an optional feature - the cover is made of a different material than the rim.

3. The rim assembly of one of the preceding claims, wherein the cover has a first surface and a second surface opposite the first surface, the first surface of the cover abutting a surface of the rim at least partially defining the well, wherein - as an optional feature - the first surface of the cover is attached to the surface of the rim at least partially defining the well with an adhesive.

4. The rim assembly of claim 3, wherein the one or more openings extend entirely through the cover, from the first surface of the cover to the second surface of the cover,
and/or wherein the one or more openings extend partially through the cover, from the first surface of the cover, into the cover,
and/or wherein a maximum thickness of the cover, between the first surface of the cover and the second surface of the cover, is between two millimeters and eight millimeters.

5. The rim assembly of claim 4, wherein the second surface of the cover has a first edge and a second edge opposite the first edge,
wherein the one or more openings include a first opening and a second opening, and
wherein the first opening is at the first edge of the second surface or closer to the first edge of the second surface than the second edge of the second surface, and the second opening is at the second edge of the second surface or closer to the second edge of the second surface than the first edge of the second surface.

6. The rim assembly of one of the preceding claims, wherein the cover is a first cover,
wherein the rim further comprises a second cover disposed in the well of the rim, the second cover including one or more openings that extend at least partially through the second cover, and
wherein the second cover abuts the first cover or is adjacent to the first cover.

7. The rim assembly of one of the preceding claims, wherein the cover is a hoop that extends around the rim.

8. A cover for one or more spokes extending through a rim for a bicycle, the cover comprising:
a body having a first surface and a second surface opposite the first surface, the body being positionable within a well of the rim, such that at least a portion of the first surface of the body abuts a surface at least partially defining the well,
wherein the body includes one or more openings extending from the first surface of the body, into the body.

9. The cover of claim 8, wherein a maximum thickness between the first surface and the second surface is at least two millimeters.

10. The cover of claim 8 or 9, wherein the second surface has a first edge and a second edge opposite the first edge,
wherein the one or more openings are one or more cutouts at the first edge of the second surface or the second edge of the second surface, respectively.

11. The cover of claim 10, wherein the one or more cutouts include a first cutout and a second cutout, the first cutout being at the first edge and the second cutout being at the second edge, and
wherein the second cutout is a cutout of the one or more cutouts closest to the first cutout.

12. The cover of one of claims 8 to 11, wherein the body is a continuous hoop, wherein - as an optional feature - the continuous hoop is made of an elastic material.

13. The cover of claim 12, wherein the continuous hoop is made of ethylene propylene diene monomer (EPDM) rubber, ethylene-vinyl acetate (EVA), neoprene, a thermoplastic, a fiber reinforced plastic, an elastomeric polymer, or any combination thereof.

14. A wheel for a bicycle, the wheel comprising:
a central hub configured for rotational attachment to the bicycle;
a plurality of spokes attached to the central hub and extending radially outward from the hub, the plurality of spokes consisting of a number of spokes;
a rim comprising:
a radially inner portion disposed along an inner circumference of the rim, the plurality of spokes being attached to the radially inner portion;
a first sidewall;
a second sidewall spaced apart from the first sidewall, wherein the first sidewall and the second sidewall extend radially outward from the radially inner portion;
a radially outer tire engaging portion disposed along an outer circumference of the rim, the radially outer tire engaging portion extending from the first sidewall and the second sidewall, respectively; and
a rim bed opposite the radially inner portion, the rim bed being between the first sidewall and the second sidewall and defining a well, wherein the plurality of spokes extend through the radially inner portion, such that portions of the plurality of spokes, respectively, are disposed in the well; and
a cover disposed in the well of the rim, over the portions of the plurality of spokes, the cover being adjacent to the portions of the plurality of spokes.

15. The wheel of claim 14, wherein the cover is comprises rim interface features disposed at edges of the cover.
